# EUROPÄISCHE PATENTSCHRIFT

(11) **EP 3 335 535 B1**
(45) Veröffentlichungstag und Bekanntmachung des Hinweises auf die Patenterteilung: **14.08.2019**
(21) Anmeldenummer: 17401123.9
(22) Anmeldetag: 07.12.2017
(51) Int. Cl.: A01C 7/08, A01C 7/04

(54) **VORRICHTUNG ZUM FÖRDERN VON AUF EINER LANDWIRTSCHAFTLICHEN FLÄCHE AUSZUBRINGENDEM GRANULAREM MATERIAL MIT GLEICHMÄSSIGEM VEREINZELUNGSDRUCK**
DEVICE FOR CONVEYING GRANULAR MATERIAL TO BE APPLIED TO AN AGRICULTURAL AREA, WITH EVEN SINGULATING PRESSURE
DISPOSITIF DE TRANSPORT DE MATÉRIAU GRANULAIRE À EPANDRE SUR UNE SURFACE AGRICOLE AVEC UNE PRESSION DE SINGULATION ÉGALE

(30) Priorität: 19.12.2016 DE 102016124737
(43) Veröffentlichungstag der Anmeldung: 20.06.2018
(73) Patentinhaber: Amazonen-Werke H. Dreyer GmbH & Co. KG, 49205 Hasbergen (DE)
(72) Erfinder: Flucke, Jan, 27798 Hude (DE); Wien, Thomas, 28816 Stuhr (DE)

(56) Entgegenhaltungen:
- EP-A1- 3 108 732
- EP-B1- 2 298 056
- WO-A1-2013/180619
- DE-A1-102015 105 919

## Beschreibung

Die vorliegende Erfindung betrifft eine Vorrichtung zum Fördern von auf einer landwirtschaftlichen Fläche auszubringendem granularem Material.

Derartige Vorrichtungen finden beispielsweise in Einzelkornsämaschinen Anwendung, um Saatgut, welches in einem zentralen Saatgutvorratsbehälter angeordnet ist, zu den einzelnen Vereinzelungsgehäusen zu transportieren. Eine solche Vorrichtung ist beispielsweise aus der EP 2 298 056 B1, der WO 2013/180619 A1 und der EP 2 591 656 bekannt.

Bei den bekannten Systemen wird Saatgut in die Vereinzelungsgehäuse geleitet, das sich dort zunächst in separaten Vorratsbereichen sammelt, bevor es durch die mit einer Druckdifferenz beaufschlagte Vereinzelungstrommel oder Vereinzelungsscheibe vereinzelt und zum Ausbringen auf dem Feld an entsprechende Säschare weitergeleitet wird.

Um diese Förderung des Saatguts in die Vereinzelungsgehäuse zu ermöglichen ist ein entsprechend dimensioniertes Gebläse erforderlich. Auch darf der Luftdruck im Vorratsbereich des Vereinzelungsgehäuses nicht unter dem Vereinzelungsluftdruck liegen, da sonst ein Luftstrom durch das Saatgut entsteht, der die Körner weg von der Vereinzelungstrommel oder Vereinzelungsscheibe führt, sodass es zu Fehlstellen kommt.

Bei bekannten Systemen ist es daher erforderlich, dass der Luftdruck, der durch das Gebläse bereitgestellt wird, etwa 40 mbar über dem Vereinzelungsdruck liegen muss.

Aufgabe der vorliegenden Erfindung ist es, die pneumatische Energiebilanz zu verbessern und insbesondere den benötigten Luftdruck zur Förderung des granularen Materials vom Vorratsbehälter zur Vereinzelungseinrichtung zu reduzieren, ohne dabei jedoch den Vereinzelungsdruck negativ zu beeinflussen. Diese Aufgabe wird durch eine Vorrichtung gemäß Patentanspruch 1 gelöst.

Weitere vorteilhafte Ausgestaltungen der Erfindung sind in den abhängigen Ansprüchen angegeben.

Gemäß der Erfindung ist es also vorgesehen, dass neben dem pneumatischen Förderkanal wenigstens ein weiterer Luftkanal in die Vereinzelungseinrichtung mündet und die über den wenigstens einen Luftkanal einströmende Luft aufgrund einer Düse eine höhere Geschwindigkeit erhält als die über den pneumatischen Förderkanal in die Vereinzelungseinrichtung zugeführte Luft Dadurch kann erreicht werden, dass der Luftdruck (dynamischer Druck) in der Vereinzelungseinrichtung im Bereich der Mündung des pneumatischen Förderkanals in die Vereinzelungseinrichtung reduziert wird. Dadurch muss das Fördern des granularen Materials vom Vorratsbehälter zur Vereinzelungseinrichtung nicht gegen den Vereinzelungsdruck arbeiten, sondern gegen einen niedrigeren Luftdruck, wodurch der Luftdruck, der zum Fördern des granularen Materials bereitgestellt werden muss reduziert werden kann. Dies verbessert die pneumatische Energiebilanz der Vorrichtung.

Um nicht auf ein separates Gebläse zur Bereitstellung des Vereinzelungsdrucks zurückgreifen zu müssen, ist erfindungsgemäß weiter vorgesehen, dass ein Luftversorgungskanal den Bereich der Mündung des pneumatischen Förderkanals in die Vereinzelungseinrichtung mit einem Gehäuse einer Vereinzelungstrommel oder Vereinzelungsscheibe der Vereinzelungseinrichtung verbindet. Dadurch kann die Förderluft aus dem pneumatischen Förderkanal zusammen mit der über den wenigstens einen weiteren Luftkanal zugeführten Luft an ein Gehäuse der Vereinzelungstrommel oder Vereinzelungsscheibe geleitet werden, um dort den Vereinzelungsdruck bereitzustellen.

Da jedoch der Luftstrom aus dem pneumatischen Förderkanal entsprechend der in der Vereinzelungseinrichtung befindlichen Saatgutmenge variiert, und der Luftdruck aus dem wenigstens einen weiteren Luftkanal durch die Querschnittsverringerung an der Düse reduziert ist, kann es zu Druckvariationen im Vereinzelungsdruck kommen, die sich negativ auf die Vereinzelung auswirken könnten.

Erfindungsgemäß ist daher vorgesehen, dass eine Bypass-Leitung mit einstellbarer Luftfördermenge vorgesehen ist, welche stromaufwärts der Düse vom wenigstens einen Luftkanal oder vom pneumatischen Förderkanal abzweigt und in den Luftversorgungskanal oder in das Gehäuse der Vereinzelungstrommel oder Vereinzelungsscheibe mündet. Dadurch können Druckschwankungen ausgeglichen werden, da der Druckabfall durch die Düse durch einen Luftstrom über die Bypass-Leitung kompensiert werden kann. Der Vereinzelungsdruck kann damit weitestgehend konstant gehalten und eine negative Beeinflussung der Vereinzelungsqualität vermieden werden.

Bei der Vorrichtung kann es sich insbesondere um ein Nachfüllsystem für eine Vereinzelungseinrichtung einer landwirtschaftlichen Einzelkornsämaschine handeln. Ein derartiges Nachfüllsystem wird auch als "Nursing-System" bezeichnet.

Bei dem Vorratsbehälter kann es sich insbesondere um einen zentralen Vorratsbehälter handeln, von dem aus granulares Material an die Vereinzelungseinrichtung förderbar ist. Es können auch mehrere Vereinzelungseinrichtungen vorgesehen sein. In diesem Fall kann der Vorratsbehälter mit jeder der Vereinzelungseinrichtungen über einen separaten pneumatischen Förderkanal zum pneumatischen Fördern von granularem Material an die jeweilige Vereinzelungseinrichtung verbunden sein. Der Vorratsbehälter kann insbesondere eine sogenannte Nursingkammer umfassen oder mit einer solchen verbunden sein, über die das granulare Material in den pneumatischen Förderkanal einspeisbar ist.

Bei dem granularen Material kann es sich insbesondere um Saatgut handeln, alternativ oder zusätzlich jedoch auch um Düngemittel oder Pestizid.

Die Vereinzelungseinrichtung kann insbesondere ein mit einem Überdruck beaufschlagtes Vereinzelungsgehäuse umfassen. Das Vereinzelungsgehäuse kann einen dezentralen Sammelbehälter für das über den pneumatischen Förderkanal zugeführte granulare Material umfassen. Der pneumatische Förderkanal kann dabei in das Vereinzelungsgehäuse, insbesondere in den dezentralen Sammelbehälter münden.

Der pneumatische Förderkanal kann insbesondere in das Vereinzelungsgehäuse, insbesondere in den dezentralen Sammelbehälter, hineinreichen. Mit anderen Worten kann die Mündung des pneumatischen Förderkanals im Inneren des Vereinzelungsgehäuses, insbesondere im Inneren des dezentralen Sammelbehälters, angeordnet sein.

Die Vereinzelungseinrichtung kann zumindest eine mit einer Druckdifferenz beaufschlagbare Vereinzelungstrommel oder Vereinzelungsscheibe umfassen. Eine Vereinzelungstrommel oder Vereinzelungsscheibe kann insbesondere in Perforationsreihen angeordnete Perforationen aufweisen. An diesen Perforationen kann sich das granulare Material anlagern, wodurch es zu einer Vereinzelung kommt.

Unter einer Bypass-Leitung ist hierin insbesondere ein Kanal zu verstehen, welcher den Mündungsbereich des pneumatischen Förderkanals und insbesondere die Düse des wenigstens einen Luftkanals umgeht, so dass Luft vor der Düse aus dem wenigstens einen Luftkanal oder aus dem pneumatischen Förderkanal abgezweigt und zur Druckbeaufschlagung der Vereinzelungstrommel oder Vereinzelungsscheibe genutzt werden kann. Dafür wird die Luft aus der Bypass-Leitung in den Luftversorgungskanal oder direkt in das Gehäuse der Vereinzelungstrommel oder Vereinzelungsscheibe geleitet.

Die Vorrichtung kann außerdem ein Gebläse zum Einbringen von Luft in den pneumatischen Förderkanal umfassen. Mit Hilfe des Gebläses kann insbesondere im pneumatischen Förderkanal ein entsprechender Förderluftstrom erzeugt werden, mit dem das granulare Material pneumatisch gefördert werden kann. Durch das Gebläse kann im pneumatischen Förderkanal insbesondere ein Überdruck gegenüber dem Atmosphärendruck erzeugt werden.

Der wenigstens eine Luftkanal kann ebenfalls von dem Gebläse mit Luft gespeist werden. Es ist also nicht erforderlich, ein separates Gebläse für den wenigstens einen Luftkanal vorzusehen.

Der wenigstens eine Luftkanal kann insbesondere vom pneumatischen Förderkanal abzweigen, insbesondere vor dem Vorratsbehälter, also stromaufwärts des Vorratsbehälters. Durch diese Maßnahme ist es nicht erforderlich, ein Sieb oder ähnliches Element vorzusehen, welches den Durchtritt von granularem Material in den wenigstens einen Luftkanal vermeidet. Ein derartiges Sieb oder ähnliches Element kann jedoch vorgesehen sein, wenn der wenigstens eine Luftkanal in einer alternativen Ausführung nach dem Vorratsbehälter, also stromabwärts des Vorratsbehälter, von dem pneumatischen Förderkanal abzweigt.

Wenn die Bypass-Leitung vom pneumatischen Förderkanal abzweigt, kann dies insbesondere vor, also stromaufwärts, des Punktes geschehen, an dem der wenigstens eine Luftkanal vom pneumatischen Förderkanal abzweigt.

In der Bypass-Leitung kann ein Element zur Reduktion des effektiven Querschnitts der Bypass-Leitung angeordnet sein, insbesondere in Form einer Klappe, eines Ventils, eines Schiebers oder einer Blende. Dadurch kann die Luftfördermenge durch die Bypass-Leitung entsprechend den Erfordernissen angepasst werden. Als effektiver Querschnitt wird hier die minimale durchströmbare Fläche senkrecht zur Strömungsrichtung der Luft in der Bypass-Leitung verstanden. Diese minimale durchströmbare Fläche bestimmt die Luftfördermenge durch die Bypass-Leitung.

Die Stellung des Elements und damit der effektive Querschnitt können manuell oder automatisch einstellbar sein, insbesondere in Abhängigkeit vom Bedeckungsgrad des Nursing-Siebs. Je stärker das Nursing-Sieb durch das granulare Material blockiert wird, umso größer kann der effektive Querschnitt gewählt werden. Es kann auch vorgesehen sein die Einstellung des Elements in Abhängigkeit des verwendeten Saatgutes bzw. des benötigten Vereinzelungsdrucks einzustellen.

Die Vorrichtung kann einen Drucksensor zur Bestimmung des Vereinzelungsdrucks umfassen, wobei die Vorrichtung außerdem so ausgebildet ist, dass die Stellung des Elements basierend auf dem bestimmten Vereinzelungsdruck gesteuert oder geregelt wird. Die Steuerung oder Regelung kann insbesondere durch ein Steuerelement, beispielsweise einen Bordrechner des zugeordneten Streuers, der Sämaschine oder Schleppers, durchgeführt werden.

Die Düse kann durch eine Querschnittsverringerung des wenigstens einen Luftkanals selbst gebildet werden. Dadurch ist eine besonders kostengünstige Ausführung möglich. Die Düse kann jedoch auch als separater Bauteil ausgebildet sein. In diesem Fall kann die als separater Bauteil ausgebildete Düse insbesondere austauschbar sein. Mit anderen Worten kann die als separater Bauteil ausgebildete Düse zerstörungsfrei lösbar in der Vorrichtung angeordnet sein, beispielsweise über eine Steckverbindung. Dadurch ist eine Anpassung an unterschiedliches zu förderndes granulares Material möglich, beispielsweise an unterschiedliches Saatgut.

Der Luftversorgungskanal kann im Bereich der Mündung des pneumatischen Förderkanals in die Vereinzelungseinrichtung wenigstens abschnittsweise koaxial zum wenigstens einen Luftkanal verlaufen. Dadurch kann über den wenigstens einen Luftkanal eingebrachte Luft direkt in den Luftversorgungskanal strömen. Der Luftversorgungskanal kann dabei am der Düse zugewandten Ende einen Abschnitt aufweisen, dessen Durchmesser sich in Strömungsrichtung der Luft, insbesondere konisch, erweitert. Dadurch kann die Luftströmung im Luftversorgungskanal gleichmäßiger über den Querschnitt des Versorgungskanals verteilt werden. Der sich erweiternde Abschnitt kann als separater Bauteil, insbesondere austauschbar, ausgebildet sein. Dadurch ist eine Anpassung an die austauschbare Düse möglich.

Der pneumatische Förderkanal kann, insbesondere innerhalb der Vereinzelungseinrichtung, in einen Zuführkanal der Vereinzelungseinrichtung münden, wobei der Zuführkanal zu einer Vereinzelungstrommel oder Vereinzelungsscheibe führt. Durch das Vorsehen eines entsprechenden Zuführkanals ist eine gezielte Zuführung des granularen Materials zur Vereinzelungstrommel oder Vereinzelungsscheibe möglich.

Der Zuführkanal kann einen Abschnitt umfassen, der mehrere Entlüftungsbohrungen oder Entlüftungsöffnungen aufweist, über die Luft aus dem Zuführkanal in einen umgebenden Behälter der Vereinzelungseinrichtung strömen kann. Der umgebende Behälter kann insbesondere dem oben angesprochenen dezentralen Sammelbehälter entsprechen. Der Abschnitt mit den Entlüftungsbohrungen oder Entlüftungsöffnungen kann auch als "Sieb" oder "Nursing-Sieb" bezeichnet werden.

Das Vereinzelungsgehäuse kann zwei Kammern umfassen, wobei eine Kammer dem dezentralen Sammelbehälter und eine weitere Kammer dem Gehäuse der Vereinzelungstrommel oder Vereinzelungsscheibe entspricht. Die beiden Kammern können durch den Zuführkanal und die beschriebene Luftleitung miteinander verbunden sein. Im Übrigen können die Kammern voneinander getrennt sein.

Der wenigstens eine Luftkanal kann so angeordnet sein, dass darüber einbringbare Luft wenigstens teilweise in Richtung der über den pneumatischen Förderkanal einströmenden Luft einströmen kann. Mit anderen Worten kann die Stömungsrichtung der über den wenigstens einen Luftkanal einbringbaren Luft eine Komponente aufweisen, die parallel und gleichgerichtet ist zur Strömungsrichtung der über den pneumatischen Förderkanal einströmenden Luft In diesem Fall kann der wenigstens eine Luftkanal insbesondere auch in den Zuführkanal führen.

Es ist aber auch denkbar, dass die Strömungsrichtung der über den wenigstens einen Luftkanal einbringbaren Luft senkrecht zur Strömungsrichtung der über den pneumatischen Förderkanal einströmenden Luft verläuft Die über den wenigstens einen Luftkanal einbringbare Luft muss die über den pneumatischen Förderkanal einströmende Luft dabei nicht schneiden. Es ist ausreichend, wenn der Bereich, in den die über den wenigstens einen Luftkanal und die Düse einbringbare Luft strömt mit dem Mündungsbereich des pneumatischen Förderkanals so in Verbindung steht, dass es im Mündungsbereich des pneumatischen Förderkanals zu einer Druckreduktion kommt.

Das Innere des Zuführkanals kann über wenigstens einen Verbindungskanal mit dem Inneren des umgebenden Behälters, insbesondere des dezentralen Sammelbehälters, verbunden sein, wobei der wenigstens eine Verbindungskanal stromaufwärts des Abschnitts, der mehrere Entlüftungsbohrungen aufweist, angeordnet ist. Dies ist insbesondere dann veranlasst, wenn der wenigstens eine Luftkanal in den Zuführkanal mündet. Durch diese Maßnahme ist es möglich, dass Abluft aus dem pneumatischen Förderkanal und dem wenigstens einen Luftkanal auch dann bei der Vereinzelung genutzt werden kann, wenn die Entlüftungsbohrungen durch granulares Material verschlossen werden. In diesem Fall strömt Luft aus dem wenigstens einen Luftkanal über den wenigstens einen Verbindungskanal in das Innere des umgebenden Behälters und dann über den Luftversorgungskanal zum Gehäuse der Vereinzelungstrommel oder Vereinzelungsscheibe.

Insbesondere wenn der Zuführkanal derart mit granularem Material befüllt ist, dass das Nursing-Sieb durch das granulare Material blockiert wird, kann der Förderluftstrom im pneumatischen Förderkanal soweit reduziert werden, dass die Förderung von granularem Material vom Vorratsbehälter zur Vereinzelungseinrichtung stoppt. Erst wenn das granulare Material im Zuführkanal soweit reduziert wurde, dass das Nursing-Sieb wenigstens teilweise wieder durchströmt werden kann, kann der Luftdruck im Bereich der Mündung des pneumatischen Förderkanals wieder soweit sinken, dass ein Fördern des granularen Materials vom Vorratsbehälter zur Vereinzelungseinrichtung ermöglicht wird.

Im wenigstens einen Luftkanal kann ein Drosselventil zum Einstellen des Druckniveaus vorgesehen sein. Ebenso ist es möglich, ein Drosselventil im Luftversorgungskanal vorzusehen, der den Behälter der Vereinzelungseinrichtung mit dem Gehäuse der Vereinzelungstrommel oder Vereinzelungsscheibe verbindet.

Der pneumatische Förderkanal, der wenigstens eine Luftkanal, der Luftversorgungskanal und die Bypass-Leitung sind jeweils Elemente, die ein abgeschlossenes Volumen definieren, welches zwei Bereiche der Vorrichtung fluidisch miteinander verbindet. Mit anderen Worten kann über diese Elemente Luft von einem ersten Bereich in einen zweiten Bereich der Vorrichtung geleitet werden. Die Elemente können dabei mehrstückig ausgebildet sein. Es ist also nicht erforderlich, dass der jeweilige Kanal durch ein einzelnes Element, beispielsweise durch einen Schlauch, gebildet wird. Der pneumatische Förderkanal, der wenigstens eine Luftkanal, der Luftversorgungskanal und die Bypass-Leitung können auch wenigstens teilweise innerhalb eines Gehäuses der Vereinzelungseinrichtung angeordnet sein und/oder teilweise durch Teile des Gehäuses gebildet werden.

Die oben genannte Vorrichtung kann insbesondere Teil eines landwirtschaftlichen Geräts zum Ausbringen von granularem Material auf einer landwirtschaftlichen Fläche sein. Bei dem landwirtschaftlichen Gerät kann es sich insbesondere um eine Einzelkornsämaschine handeln. Mit anderen Worten stellt die Erfindung außerdem eine Einzelkornsämaschine bereit, welche eine der oben genannten Vorrichtungen umfasst.

Die Erfindung stellt außerdem ein Verfahren zum Fördern von auf einer landwirtschaftlichen Fläche auszubringendem granularem Material gemäß Anspruch 11 bereit.

Das Verfahren kann insbesondere mit einer oben beschriebenen Vorrichtung durchgeführt werden. Das Verfahren kann daher insbesondere auch ein Bereitstellen einer oben genannten Vorrichtung oder eines oben genannten landwirtschaftlichen Geräts umfassen.

Weitere Merkmale und Vorteile der Erfindung werden nachfolgend anhand der beispielhaften Figuren erläutert. Dabei zeigt:
- Fig. 1: eine schematische Darstellung einer erfindungsgemäßen Vorrichtung in einem ersten Betriebszustand; und
- Fig. 2: eine schematische Darstellung der erfindungsgemäßen Vorrichtung nach Fig. 1 in einem zweiten Betriebszustand.

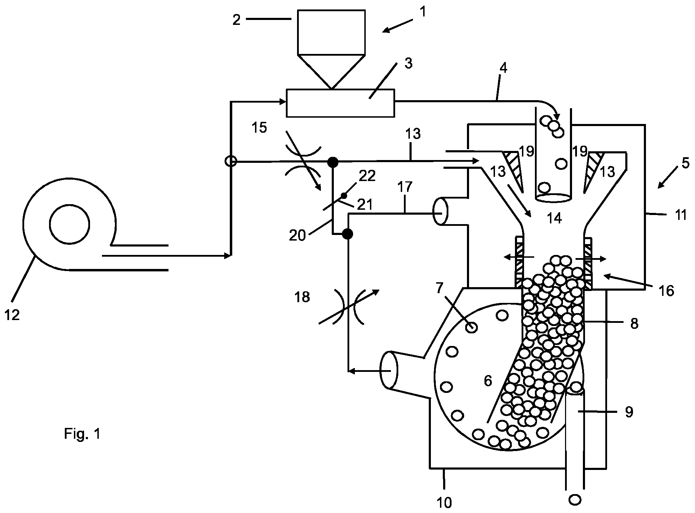

Fig. 1 zeigt schematisch ein Beispiel einer Vorrichtung zum Fördern von auf einer landwirtschaftlichen Fläche auszubringendem granularem Material. Die Vorrichtung umfasst dabei einen Vorratsbehälter 1 für das auszubringende granulare Material. Der Vorratsbehälter 1 umfasst dabei zwei Elemente, nämlich ein Vorratsreservoir 2 und eine Einspeiseeinrichtung 3. Die Einspeiseeinrichtung 3, auch Nursingkammer genannt, dient dazu, granulares Material aus dem Reservoir 2 in den pneumatischen Förderkanal 4 einzuspeisen.

Bei dem granularen Material kann es sich insbesondere um Saatgut, alternativ jedoch auch um granularen Dünger oder granulares Pestizid handeln.

Außerdem ist eine Vereinzelungseinrichtung 5 vorgesehen, welche eine mit einer Druckdifferenz beaufschlagbare Vereinzelungsscheibe 6 umfasst, welche Perforationen 7 aufweist. An diesen Perforationen 7 können sich Körner des granularen Materials anlagern, wenn sich die Perforationen 7 durch einen Zuführbereich eines Zuführkanals 8 für das granulare Material bewegen.

Die Vereinzelungsscheibe 6 dreht sich, sodass die an den Perforationen 7 anhaftenden Körner sequenziell an einer Abgabeeinrichtung 9 vorbeigeführt werden, wo sie sich von der Vereinzelungsscheibe 6 lösen und an entsprechende Abgabeelemente weitergeleitet werden. Bei diesen Abgabeelementen, hier nicht dargestellt, kann es sich beispielsweise um Säschare einer Einzelkornsämaschine handeln.

Die Vereinzelungsscheibe 6 ist von einem Gehäuse 10 umgeben, in dem ein entsprechender Überdruck gegenüber dem Atmosphärendruck herstellbar ist.

Der Zuführkanal 8 erstreckt sich auch in einen dezentralen Sammelbehälter 11, der in diesem Beispiel über dem Gehäuse 10 der Vereinzelungsscheibe 6 angeordnet ist. Der Zuführkanal 8 verbindet das Innere des dezentralen Sammelbehälters 11 und des Gehäuses 10 der Vereinzelungsscheibe 6.

Anstelle der Vereinzelungsscheibe 6 könnte auch eine Vereinzelungstrommel Anwendung finden.

Fig. 1 zeigt außerdem ein Gebläse 12, welches ebenso wie der Vorratsbehälter 1 mit dem pneumatischen Förderkanal 4 verbunden ist. Mit dem Gebläse 12 kann im pneumatischen Förderkanal 4 ein Förderluftstrom gebildet werden, welcher das granulare Material vom Vorratsbehälter 1 zur Vereinzelungseinrichtung 5 fördert. Der pneumatische Förderkanal 4, hier nur schematisch dargestellt, mündet dabei in den dezentralen Sammelbehälter 11 der Vereinzelungseinrichtung 5. Durch das Gebläse 12 wird im pneumatischen Förderkanal 4 ein Luftüberdruck gegenüber dem Atmosphärendruck erzeugt.

In den dezentralen Sammelbehälter 11 der Vereinzelungseinrichtung 5 mündet auch ein Luftkanal 13, der in diesem Ausführungsbeispiel stromaufwärts des Vorratsbehälter 1 vom pneumatischen Förderkanal 4 abzweigt und somit auch durch das Gebläse 12 mit Luft beaufschlagt wird. Der Luftkanal 13 bildet somit einen Bypass zum pneumatischen Förderkanal 4.

Innerhalb des dezentralen Sammelbehälters 11 ist der Luftkanal 13 in diesem Beispiel trichterförmig ausgebildet und mit seiner Mündung auf einen Mündungsbereich 14 des pneumatischen Förderkanals 4 gerichtet. Der Mündungsbereich 14 ist stromabwärts der Mündung des pneumatischen Förderkanals 4 und somit im Inneren des Zuführkanals 8 angeordnet. In diesem Bereich 14 strömt die Luft aus dem pneumatischen Förderkanal 4 in diesem Beispiel im Wesentlichen senkrecht nach unten in Richtung der Vereinzelungsscheibe 6. Die über den Luftkanal 13 einströmende Luft weist wenigstens eine Komponente auf, welche in dieselbe Richtung gerichtet ist, wie die über den pneumatischen Förderkanal 4 einströmende Luft, also in Richtung der Vereinzelungsscheibe 6 gerichtet.

Durch den zur Mündung hin verringerten Querschnitt der Leitung 13 wird eine Düse gebildet, die eine Beschleunigung der Luft, die über den Luftkanal 13 in den Bereich 14 einströmt, bewirkt, und zwar insbesondere derart, dass die Strömungsgeschwindigkeit der Luft aus dem Luftkanal 13 in Richtung der Vereinzelungsscheibe 6 höher ist, als die Strömungsgeschwindigkeit der Luft, welche über den pneumatischen Förderkanal 4 in den Bereich 14 und in Richtung der Vereinzelungsscheibe 6 einströmt. Dadurch wird der Luftdruck, insbesondere der dynamische Luftdruck, im Bereich 14 stromabwärts der Mündung des pneumatischen Förderkanals 4 reduziert. Diese Reduzierung des Luftdrucks im Bereich 14 führt dazu, dass ein geringerer Förderdruck im pneumatischen Förderkanal 4 erforderlich ist, da durch den geringeren Druck im Bereich 14 granulares Material gewissermaßen angesaugt wird. Die Vorrichtung gestattet daher eine Verbesserung der pneumatischen Energiebilanz. Mit anderen Worten kann das Gebläse 12 mit geringerer Leistung betrieben oder kleiner dimensioniert werden.

Die Anordnung des Luftkanals 13 zur Mündung des pneumatischen Förderkanals 4 ist nur beispielhaft. Es wäre auch denkbar, dass der Luftkanal über eine Seitenwand des dezentralen Sammelbehälters 11 einmündet. In diesem Fall wäre die Strömungsrichtung der über den Luftkanal 13 einströmenden Luft senkrecht zur Strömungsrichtung der über den pneumatischen Förderkanal 4 einströmenden Luft.

In diesem Beispiel wird die Düse im Mündungsbereich des Luftkanals 13 auf einfache Weise durch eine Querschnittsverringerung des Luftkanals 13 selbst gebildet. Es wäre jedoch auch möglich, dass die Düse als separater Bauteil ausgebildet ist. In diesem Fall kann die Düse insbesondere austauschbar sein, um eine Anpassung an unterschiedliches Saatgut zu ermöglichen. Für größeres Saatgut kann eine Düse verwendet werden, die eine stärkere Beschleunigung der Strömungsgeschwindigkeit verursacht, um eine größere Druckreduktion zu ermöglichen. Wenn die Düse als separater Bauteil ausgebildet ist, kann diese beispielsweise über eine Steckverbindung im Mündungsbereich des Luftkanals 13 anordenbar sein.

Im Luftkanal 13 kann außerdem ein Drosselventil 15 vorgesehen sein, um das Druckniveau innerhalb des Luftkanals 13 einzustellen.

In Fig. 1 ist außerdem ein Abschnitt 16 des Zuführkanals 8 ersichtlich, in dem mehrere Entlüftungsbohrungen vorgesehen sind. Dieser Abschnitt 16 kann auch als Nursing-Sieb bezeichnet werden. Solange der Zuführkanal 8 nicht entsprechend gefüllt ist, kann Nursingabluft, also Luft aus dem pneumatischen Förderkanal 4 und dem Luftkanal 13 über die Entlüftungsbohrungen im Abschnitt 16 aus dem Zuführkanal 8 entweichen und in einen umgebenden Bereich des dezentralen Sammelbehälters 11 strömen. Von dort aus gelangt die Abluft über einen Luftversorgungskanal 17, hier nur schematisch dargestellt, zum Gehäuse 10 der Vereinzelungsscheibe 6. Die Abluft, die zum Fördern des granularen Materials vom Vorratsbehälter 1 zur Vereinzelungseinrichtung 5 verwendet wird, kann daher wenigstens teilweise zur Vereinzelung im Gehäuse 10 genutzt werden, also zur Erzeugung eines Überdrucks im Gehäuse 10. Dadurch kann die pneumatische Energiebilanz weiter erhöht werden.

Innerhalb des Luftversorgungskanals 17 kann wiederum ein Drosselventil 18 vorgesehen sein, um das Druckniveau innerhalb des Luftversorgungskanals 17 zu variieren.

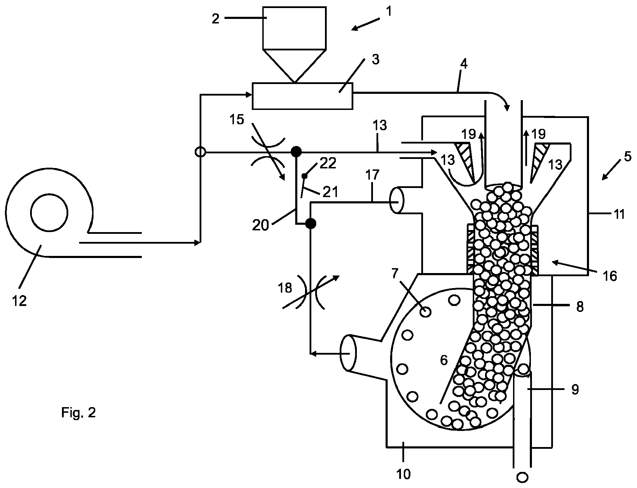

Wenn mehr granulares Material zur Vereinzelungseinrichtung 5 gefördert wird, kommt es dazu, dass der Abschnitt 16 durch granulares Material verschlossen wird und somit keine Luft mehr über die Entlüftungsbohrungen im Abschnitt 16 entweichen kann. Diese Situation ist in Fig. 2 dargestellt. Das granulare Material reicht dann bis in den Bereich 14 stromabwärts der Mündung des pneumatischen Förderkanals 4.

Es ist in der Vorrichtung gemäß den Figuren daher ein weiterer Verbindungskanal 19 vorgesehen, hier in Form eines zum Förderkanal 4 konzentrischen Ringkanals, welcher das Innere des Zuführkanals 8 mit dem Inneren des umgebenden Sammelbehälters 11 verbindet. Wenn der Zuführkanal 8 einen Füllstand wie in Fig. 2 gezeigt erreicht hat, wird die über den Luftkanal 13 eingebrachte Luft in den Verbindungskanal 19 umgeleitet und entweicht so aus dem Bereich des Zuführkanals 8. Über den Luftversorgungskanal 17 kann diese Luft dann wiederum zur Vereinzelung genutzt werden.

Durch die Umlenkung des Luftstroms aus dem Luftkanal 13 kann jedoch der Druck im Bereich 14 stromabwärts der Mündung des pneumatischen Förderkanals 4 nicht mehr reduziert werden, sodass die Voraussetzungen für ein Fördern von granularem Material vom Vorratsbehälter 1 zur Vereinzelungseinrichtung 5 nicht mehr gegeben sind, der Luftstrom im pneumatischen Förderkanal 4 also nicht mehr ausreicht. Die Nachförderung von granularem Material in die Vereinzelungseinrichtung 5 wird daher unterbrochen. Dies setzt natürlich voraus, dass die Leistung des Gebläses 12 so weit reduziert wurde, dass eine Förderung von granularem Material im pneumatischen Förderkanal 4 vom Vorratsbehälter 1 zur Vereinzelungseinrichtung 5 nur dann möglich ist, wenn der Druck im Bereich 14 aufgrund der einströmenden Luft aus dem Luftkanal 13 reduziert wird.

Ein weiterer Vorteil der oben genannten Ausbildungsform ist es, dass Nursingabluft nicht in die Umgebung abgeführt wird, sondern zum Betrieb der Vereinzelung genutzt wird.

Zwischen den in den Fig. 1 und 2 dargestellten Betriebszuständen kann es jedoch zu Druckdifferenzen im Bereich des Luftversorgungskanals 17 und damit zu Schwankungen des Vereinzelungsdrucks, der an der Vereinzelungsscheibe 6 anliegt, kommen. Im Fall der in Fig. 2 dargestellten Blockierung des Nursing-Siebs durch das Saatgut steht die Förderluft aus dem pneumatischen Förderkanal 4 nämlich nicht mehr zur Verfügung.

Um diesen Nachteil zu beheben, sieht die Vorrichtung eine Bypass-Leitung 20 vor, welche vor der Düse des Luftkanals 13 vom Luftkanal 13 abzweigt und in den Luftversorgungskanals 17 mündet. Alternativ könnte die Bypass-Leitung 20 auch direkt in das Gehäuse 10 münden. Auch wäre es denkbar, dass die Bypass-Leitung 20 bereits vor der Abzweigung des Luftkanals 13 vom pneumatischen Förderkanal 4 abzweigt.

In der Bypass-Leitung 20 ist eine Klappe 21 vorgesehen, welche um eine Achse 22 schwenkbar ist. Die Klappe ermöglicht es, die Luftfördermenge, welche über die Bypass-Leitung 20 strömt einzustellen. Anstelle der Klappe könnten auch ein Schieber, ein Ventil oder Ähnliches Verwendung finden.

Im Falle des in Fig. 1 dargestellten Betriebszustands ist die über den Luftkanal 13 einströmende Luft sowie der Förderluftstrom aus dem pneumatischen Förderkanal 4 in Summe ausreichend, um den erforderlichen Vereinzelungsdruck bereitzustellen. Die Klappe 21 verschließt daher die Bypass-Leitung 20. Im Betriebszustand, der in Fig. 2 dargestellt ist, kommt der Förderluftstrom aus dem pneumatischen Förderkanal 4 praktisch zum Erliegen. Um eine Druckreduktion im Luftversorgungskanals 17 und damit an der Vereinzelungsscheibe 6 zu vermeiden, wird die Bypass-Leitung 20 durch die Klappe 21 komplett freigegeben. Da die Luft in diesem Fall nicht die Düse passieren muss, reicht der Luftstrom über die Bypass-Leitung 20 aus, um den erforderlichen Vereinzelungsdruck bereitzustellen.

Es ist auch denkbar, die Klappe 21 in Schwenkpositionen zwischen den in den Fig. 1 und 2 gezeigten Positionen anzuordnen, um damit den effektiven Querschnitt der Bypass-Leitung 20 einzustellen, beispielsweise in Abhängigkeit vom Grad in dem das Nursing-Sieb von granularem Material blockiert wird, oder in Abhängigkeit von dem durch einen Drucksensor im Gehäuse 10 detektierten Vereinzelungsdruck.

Es ist auch denkbar, die Klappe jeweils auf das verwendete Saatgut bzw. den benötigten Vereinzelungsdruck vor dem Beginn des Sä- oder Ausbringvorganges derart einzustellen, dass sowohl bei vollständig frei liegendem Nursing-Sieb als auch bei vollständig blockiertem Nursing-Sieb ein ordnungsgemäßer Betrieb der Vereinzelung gesichert ist. Mit anderen Worten kann der erwartete Druckbereich eingestellt werden, welcher im Betrieb je nach Saatgutstand im Zuführkanal 8 zu erwarten ist und dieser an den für das jeweils verwendete Saatgut angepasst werden.

Die gezeigte Vorrichtung kann insbesondere Teil einer Einzelkornsämaschine sein. Diese kann neben den hier gezeigten Elementen noch weitere Elemente aufweisen, um das granulare Material auf einer landwirtschaftlichen Fläche ausbringen zu können.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind. Insbesondere ist die Geometrie des Luftkanals 13 und auch des Verbindungskanals 19 nicht auf die in den Abbildungen gezeigte Geometrie beschränkt. Der Luftkanal 13 könnte auch andere Elemente umfassen, welche eine Erhöhung der Strömungsgeschwindigkeit im Bereich 14 ermöglicht, beispielsweise andere Formen von Düsen. Auch könnten der Luftkanal 13 und der Verbindungskanal 19 vertauscht sein, also der Mündungsbereich des Luftkanals 13 innerhalb des Sammelbehälters 11 so ausgebildet und angeordnet sein, wie es in den Fig. 1 und 2 der Verbindungskanal 19 ist, und umgekehrt. Die gezeigten Kanäle bzw. Luftleitungen können aus einem oder mehreren miteinander verbundenen Rohren bestehen, die typischerweise zylindrisch ausgebildet sind, aber auch andere Geometrien aufweisen können.

## Patentansprüche

1. Vorrichtung zum Fördern von auf einer landwirtschaftlichen Fläche auszubringendem granularem Material, umfassend:
einen Vorratsbehälter (1) für das granulare Material;
eine Vereinzelungseinrichtung (5); und
einen pneumatischen Förderkanal (4) zum pneumatischen Fördern von granularem Material vom Vorratsbehälter (1) zur Vereinzelungseinrichtung (5);
wobei
im Bereich (14) der Mündung des pneumatischen Förderkanals (4) in die Vereinzelungseinrichtung (5) wenigstens ein Luftkanal (13) in die Vereinzelungseinrichtung (5) mündet, und
ein Luftversorgungskanal (17) den Bereich (14) der Mündung des pneumatischen Förderkanals (4) in die Vereinzelungseinrichtung (5) mit einem Gehäuse (10) einer Vereinzelungstrommel oder Vereinzelungsscheibe (6) der Vereinzelungseinrichtung (5) verbindet;
wobei im Bereich der Mündung des wenigstens einen Luftkanals (13) in die Vereinzelungseinrichtung (5) eine Düse vorgesehen ist, so dass über den wenigstens einen Luftkanal (13) zugeführte Luft eine höhere Geschwindigkeit erhält, als die über den pneumatischen Förderkanal (4) in die Vereinzelungseinrichtung (5) zugeführte Luft; und
**dadurch gekennzeichnet, dass** eine Bypass-Leitung (20) mit einstellbarer Luftfördermenge vorgesehen ist, welche stromaufwärts der Düse vom wenigstens einen Luftkanal (13) oder dem pneumatischen Förderkanal (4) abzweigt und in den Luftversorgungskanal (17) oder in das Gehäuse (10) der Vereinzelungstrommel oder Vereinzelungsscheibe (6) mündet.

2. Vorrichtung nach Anspruch 1, außerdem umfassend ein Gebläse (12) zum Einbringen von Luft in den pneumatischen Förderkanal (4), wobei der wenigstens eine Luftkanal (13) ebenfalls von dem Gebläse (12) mit Luft gespeist wird.

3. Vorrichtung nach Anspruch 2, wobei der wenigstens eine Luftkanal (13) vor dem Vorratsbehälter (1) von dem pneumatischen Förderkanal (4) abzweigt.

4. Vorrichtung nach einem der vorangegangenen Ansprüche, wobei in der Bypass-Leitung (20) zur Einstellung der Luftfördermenge ein Element (21) zur Reduktion des effektiven Querschnitts der Bypass-Leitung angeordnet ist, insbesondere in Form einer Klappe, eines Ventils, eines Schiebers oder einer Blende.

5. Vorrichtung nach einem der vorangegangenen Ansprüche, wobei die Düse als separater Bauteil ausgebildet ist.

6. Vorrichtung nach Anspruch 5, wobei die als separater Bauteil ausgebildete Düse austauschbar ist.

7. Vorrichtung nach einem der vorangegangenen Ansprüche, wobei der pneumatische Förderkanal (4) in einen Zuführkanal (8) der Vereinzelungseinrichtung (5) mündet, wobei der Zuführkanal (8) zur Vereinzelungstrommel oder Vereinzelungsscheibe (6) führt.

8. Vorrichtung nach Anspruch 7, wobei der Zuführkanal (8) einen Abschnitt (16) umfasst, der mehrere Entlüftungsbohrungen oder Entlüftungsöffnungen aufweist, über die Luft aus dem Zuführkanal (8) in einen umgebenden Behälter (11) der Vereinzelungseinrichtung (5) strömen kann.

9. Vorrichtung nach einem der Ansprüche 7 - 8, wobei das Innere des Zuführkanals (8) über wenigstens einen Verbindungskanal (19) mit dem Inneren des umgebenden Behälters (11) verbunden ist, wobei der wenigstens eine Verbindungskanal (19) stromaufwärts des Abschnitts (16), der mehrere Entlüftungsbohrungen aufweist, angeordnet ist.

10. Einzelkornsämaschine umfassend eine Vorrichtung nach einem der vorangegangenen Ansprüche.

11. Verfahren zum Fördern von auf einer landwirtschaftlichen Fläche auszubringendem granularem Material, umfassend:
Fördern des auszubringenden granularen Materials von einem Vorratsbehälter (1) für das granulare Material zu einer Vereinzelungseinrichtung (5) über einen pneumatischen Förderkanal (4);
wobei
im Bereich (14) der Mündung des pneumatischen Förderkanals (4) in die Vereinzelungseinrichtung (5) Luft über wenigstens einen Luftkanal (13) in die Vereinzelungseinrichtung (5) eingebracht wird,
wobei die über den wenigstens einen Luftkanal (13) einströmende Luft aufgrund einer Düse eine höhere Geschwindigkeit aufweist als die über den pneumatischen Förderkanal (4) in die Vereinzelungseinrichtung (5) einströmende Luft;
wobei ein Luftversorgungskanal (17) den Bereich (14) der Mündung des pneumatischen Förderkanals (4) in die Vereinzelungseinrichtung (5) mit einem Gehäuse (10) einer Vereinzelungstrommel oder Vereinzelungsscheibe (6) der Vereinzelungseinrichtung (5) verbindet;
**dadurch gekennzeichnet, dass** eine Bypass-Leitung mit einstellbarer Luftfördermenge vorgesehen ist, welche stromaufwärts der Düse vom wenigstens einen Luftkanal (13) oder vom pneumatischen Förderkanal (4) abzweigt und in den Luftversorgungskanal (17) oder in das Gehäuse (10) der Vereinzelungstrommel oder Vereinzelungsscheibe (6) mündet; und
wobei das Verfahren außerdem umfasst:
Einstellen der Luftfördermenge in der Bypass-Leitung zur Einstellung des Vereinzelungsdrucks an der Vereinzelungstrommel oder Vereinzelungsscheibe (6).

## Claims

1. Device for conveying granular material to be applied to an agricultural area, comprising:
a storage container (1) for the granular material; a separating device (5); and
a pneumatic conveying channel (4) for the pneumatic conveyance of granular material from the storage container (1) to the separating device (5) ;
at least one air channel (13) opening into the separating device (5) in the region (14) of the opening of the pneumatic conveying channel (4) into the separating device (5), and
an air supply channel (17) connecting the region (14) of the opening of the pneumatic conveying channel (4) into the separating device (5) to a housing (10) of a separating drum or separating disc (6) of the separating device (5);
a nozzle being provided in the region of the opening of the at least one air channel (13) into the separating device (5), so that air supplied via the at least one air channel (13) is imparted a higher speed than the air supplied to the separating device (5) by the pneumatic conveying channel (4); and
**characterized in that**
a bypass line (20) with adjustable air delivery volume is provided, which branches off from the at least one air channel (13) or the pneumatic conveying channel (4) upstream of the nozzle and opens into the air supply channel (17) or into the housing (10) of the separating drum or separating disc (6).

2. Device according to Claim 1, additionally comprising a blower (12) for introducing air into the pneumatic conveying channel (4), the at least one air channel (13) likewise being fed with air by the blower (12).

3. Device according to Claim 2, the at least one air channel (13) branching off from the pneumatic conveying channel (4) before the storage container (1).

4. Device according to one of the preceding claims, an element (21) for the reduction of the effective cross section of the bypass line being arranged in the bypass line (20), in particular in the form of a flap, a valve, a slider or a diaphragm.

5. Device according to one of the preceding claims, the nozzle being formed as a separate component.

6. Device according to Claim 5, the nozzle formed as a separate component being interchangeable.

7. Device according to one of the preceding claims, the pneumatic conveying channel (4) opening into a feed channel (8) of the separating device (5), the feed channel (8) leading to the separating drum or separating disc (6).

8. Device according to Claim 7, the feed channel (8) comprising a section (16) which has multiple ventilation holes or ventilation openings, via which air from the feed channel (8) can flow into a surrounding container (11) of the separating device (5).

9. Device according to one of Claims 7 - 8, the interior of the feed channel (8) being connected via at least one connecting channel (19) to the interior of the surrounding container (11), the at least one connecting channel (19) being arranged upstream of the section (16) which has multiple ventilation holes.

10. Precision seed drill comprising a device according to one of the preceding claims.

11. Method for conveying granular material to be applied to an agricultural area, comprising:
conveying the granular material to be applied from a storage container (1) for the granular material to a separating device (5) via a pneumatic conveying channel (4);
air being introduced into the separating device (5) via at least one air channel (13) in the region (14) of the opening of the pneumatic conveying channel (4) into the separating device (5),
the air flowing in via the at least one air channel (13) having a higher speed, because of a nozzle, than the air flowing into the separating device (5) via the pneumatic conveying channel (4) ;
an air supply channel (17) connecting the region (14) of the opening of the pneumatic conveying channel (4) into the separating device (5) to a housing (10) of a separating drum or separating disc (6) of the separating device (5);
**characterized in that**
a bypass line with adjustable air delivery volume is provided, which branches off from the at least one air channel (13) or from the pneumatic conveying channel (4) upstream of the nozzle and opens into the air supply channel (17) or into the housing (10) of the separating drum or separating disc (6); and
the method additionally comprising:
adjusting the air delivery volume in the bypass line to adjust the separating pressure on the separating drum or separating disc (6).

## Revendications

1. Dispositif pour le transport de matière granulaire à distribuer sur une surface agricole, comportant :
un réservoir de stockage (1) pour la matière granulaire ;
un dispositif de séparation (5) ; et
un canal de transport pneumatique (4) pour le transport pneumatique de matière granulaire du réservoir de stockage (1) au dispositif de séparation (5) ;
dans lequel au moins un canal d'air (13) débouche dans le dispositif de séparation (5) dans la région (14) de l'embouchure du canal de transport pneumatique (4) dans le dispositif de séparation (5) et
un canal d'alimentation en air (17) relie la région (14) de l'embouchure du canal de transport pneumatique (4) dans le dispositif de séparation (5) à un carter (10) d'un tambour de séparation ou disque de séparation (6) du dispositif de séparation (5) ;
dans lequel une buse est prévue dans la région de l'embouchure dudit au moins un canal d'air (13) dans le dispositif de séparation (5), de telle sorte que l'air acheminé par le biais dudit au moins un canal d'air (13) maintienne une vitesse plus élevée que l'air acheminé par le biais du canal de transport pneumatique (4) dans le dispositif de séparation (5) ; et
**caractérisé en ce qu'**une conduite de dérivation (20) présentant un débit de transport d'air réglable est prévue, laquelle bifurque à partir d'au moins un canal d'air (13) ou du canal de transport pneumatique (4) en amont de la buse et débouche dans le canal d'alimentation en air (17) ou dans le carter (10) du tambour de séparation ou disque de séparation (6).

2. Dispositif selon la revendication 1, comportant en outre une soufflante (12) pour introduire de l'air dans le canal de transport pneumatique (4), dans lequel ledit au moins un canal d'air (13) est également alimenté en air par la soufflante (12).

3. Dispositif selon la revendication 2, dans lequel ledit au moins un canal d'air (13) bifurque à partir du canal de transport pneumatique (4) avant le réservoir de stockage (1).

4. Dispositif selon l'une des revendications précédentes, dans lequel un élément (21) servant à la réduction de la section transversale effective de la conduite de dérivation est disposé dans la conduite de dérivation (20) pour le réglage du débit de transport d'air, en particulier sous la forme d'un volet, d'une soupape, d'un tiroir ou d'un diaphragme.

5. Dispositif selon l'une des revendications précédentes, dans lequel la buse est réalisée en tant que composant séparé.

6. Dispositif selon la revendication 5, dans lequel la buse réalisée en tant que composant séparé est remplaçable.

7. Dispositif selon l'une des revendications précédentes, dans lequel le canal de transport pneumatique (4) débouche dans un canal d'alimentation (8) du dispositif de séparation (5), dans lequel le canal d'alimentation (8) mène jusqu'au tambour de séparation ou disque de séparation (6).

8. Dispositif selon la revendication 7, dans lequel le canal d'alimentation (8) comporte une partie (16) qui comprend plusieurs alésages d'aération ou ouvertures d'aération par le biais desquels l'air peut s'écouler hors du canal d'alimentation (8) dans un récipient d'enceinte (11) du dispositif de séparation (5).

9. Dispositif selon l'une des revendications 7 et 8, dans lequel l'intérieur du canal d'alimentation (8) est relié par le biais d'au moins un canal de liaison (19) à l'intérieur du récipient d'enceinte (11), dans lequel ledit au moins un canal de liaison (19) est disposé en amont de la partie (16) qui comprend plusieurs alésages d'aération.

10. Semoir monograine comportant un dispositif selon l'une des revendications précédentes.

11. Procédé de transport de matière granulaire à distribuer sur une surface agricole, comportant :
le transport de la matière granulaire à distribuer d'un réservoir de stockage (1) pour la matière granulaire à un dispositif de séparation (5) par le biais d'un canal de transport pneumatique (4) ;
dans lequel de l'air est introduit, par le biais d'au moins un canal d'air (13), dans le dispositif de séparation (5) dans la région (14) de l'embouchure du canal de transport pneumatique (4) dans le dispositif de séparation (5),
dans lequel l'air affluant par le biais dudit au moins un canal d'air (13) présente, en raison d'une buse, une vitesse plus élevée que l'air affluant par le biais du canal de transport pneumatique (4) dans le dispositif de séparation (5) ;
dans lequel un canal d'alimentation en air (17) relie la région (14) de l'embouchure du canal de transport pneumatique (4) dans le dispositif de séparation (5) à un carter (10) d'un tambour de séparation ou disque de séparation (6) du dispositif de séparation (5) ;
**caractérisé en ce qu'**une conduite de dérivation présentant un débit de transport d'air réglable est prévue, laquelle bifurque à partir d'au moins un canal d'air (13) ou du canal de transport pneumatique (4) en amont de la buse et débouche dans le canal d'alimentation en air (17) ou dans le carter (10) du tambour de séparation ou disque de séparation (6) ; et
le procédé comportant en outre :
le réglage du débit de transport d'air dans la conduite de dérivation pour le réglage de la pression de séparation au niveau du tambour de séparation ou disque de séparation (6).
